# FASCICULE DE BREVET EUROPEEN

(11) **EP 3 345 882 B1**
(45) Date de publication et mention de la délivrance du brevet: **03.03.2021**
(21) Numéro de dépôt: 18150909.2
(22) Date de dépôt: 15.07.2013
(51) Int. Cl.: C04B 35/10, C04B 35/48, C04B 35/56, C04B 35/632, C04B 35/634, B22F 3/22, C04B 35/584, C04B 26/06, C04B 111/70, C04B 111/00, B22F 1/00

(54) **COMPOSITION DE MOULAGE PAR INJECTION**
SPRITZGUSSZUSAMMENSETZUNG
INJECTION-MOULDING COMPOSITION

(43) Date de publication de la demande: 11.07.2018
(62) Demande divisionnaire de: 13176532.3
(73) Titulaire: Comadur S.A., 2400 Le Locle (CH)
(72) Inventeur: Cartier, Damien, 25000 Besançon (FR)
(74) Mandataire: ICB SA

(56) Documents cités:
- WO-A1-2005/061602
- US-A- 5 254 613
- US-A- 5 266 264
- US-A1- 2003 220 424
- Jafar Firouzi ET AL: "Rheological Behaviour of Metal Powder Suspensions Under Dynamic Loading", IRANIAN POLYMER JOURNAL, 2006, pages 127-134, XP055101429, Extrait de l'Internet: URL:http://nullwww.sid.ir/en/VEWSSID/J_pdf /81320060204.pdf [extrait le 2014-02-11]
- BERENIKA HAUSNEROVÁ: "Rheological characterization of powder injection molding compounds", POLIMERY, vol. 55, no. 1, 2010, pages 3-11, XP055385569, PL ISSN: 0032-2725

## Description

L'invention concerne une composition de moulage par injection (feedstock) destinée à la fabrication de pièces de forme métalliques ou céramiques

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de « céramiques » inorganiques, on met en œuvre des techniques de métallurgie des poudres. On appellera ici « céramique » le matériau de synthèse inorganique obtenu, quelle que soit la nature de ce matériau, saphir, rubis, diamant artificiel, glace saphir, céramique, micro-aimant, métal, alliage, ou autre.

Les matières premières de base sont de différente nature, de façon générale, et comportent au moins d'une part de la poudre de céramique et d'autre part des liants organiques, tels que résines ou matières plastiques ou similaires qui permettent l'injection et la bonne tenue du composant réalisé avec le mélange de l'ensemble des matières premières. D'autres additifs peuvent être incorporés au mélange. Ces matières premières peuvent également être de différentes textures: solide, pulvérulente, liquide, ou encore pâteuse. Le mélange peut en outre changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux
   (ou plus) si nécessaire ;
- malaxage d'homogénéisation ;
- granulation ;
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion ou/et la dissolution de certains composants du mélange ;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

L'invention vise plus particulièrement à proposer un liant pour composition de moulage par injection optimisé facilitant le malaxage en métallurgie des poudres pour l'obtention de céramiques ou de métaux, de façon à obtenir une production de qualité très reproductible, avec un coefficient de retrait maîtrisé.

On connaît déjà, par exemple le brevet US 5145900, les documents US5266264A, US5254613A ou US2003/220424A1, et aussi les articles de Jafar Firouzi et al.: "Rheological Behaviour of Metal Powder Suspensions Under Dynamic Loading" (Iranian Polymer Journal, 2006, Volume 15, n° 2, pages 127-134) et de Berenika Hausnerová: "Rheological characterization of powder injection molding compounds" (Polimery 2010, Volume 55, n° 1, pages 3-11), des matériaux thermoplastiques (feedstock) pour la fabrication de pièces moulées céramiques qui contiennent une poudre inorganique frittable et un liant organique polymérique, celui-ci étant essentiellement constitué d'un mélange de polyoxyméthylène et de copolymères de polyoxyméthylène et de polyoxolanes.

Ces feedstocks ont révélé toutefois de nombreux inconvénients, comme par exemple une fluidité insuffisante en moulage par injection, et des problèmes de tenue des pièces de formes moulées qui présentent des fissures et du feuilletage, ceci surtout lorsque la forme des pièces est complexe; ils sont en outre responsables de problèmes environnementaux dus à la nécessité d'utiliser des produits agressifs, tels que l'acide nitrique, plus particulièrement pour l'élimination finale de la phase organique. De plus, l'utilisation d'eau dans ce processus d'élimination du liant organique est problématique dans le cas où les feedstocks contiennent des matériaux métalliques qui risquent d'être oxydés.

En conséquence, le but de la présente invention consiste à fournir un liant pour composition de moulage qui obvie aux inconvénients susmentionnés, et plus particulièrement qui vise à améliorer l'homogénéité et la fluidité du feedstock pour permettre la fabrication de pièces métalliques ou céramiques de formes plus complexes, de réduire les temps de cycle en production, d'augmenter la résistance mécanique des corps verts et déliantés aux contraintes de production (manipulation et diverses opérations de reprise), et enfin qui supprime la nécessité d'utiliser des produits agressifs pour l'environnement pour l'élimination du liant organique, en remplaçant ceux-ci par des solvants non polluants pouvant être éliminés par simple traitement thermique.

A cet effet, l'invention a pour objet une composition de moulage par injection (feedstock) destinée à la fabrication de pièces de forme métalliques ou céramiques telle que définie dans la revendication 1.

La présente invention sera maintenant illustrée plus en détails par les exemples non limitatifs qui suivent.

### Exemple 1

On mélange la partie polymérique du liant à une poudre d'oxyde zirconium noir (de type St. Gobain Zir Black) à une température d'environ 150°C pour former un prémix. A ce prémix sont ajoutés les cires et le surfactant, et la température est à nouveau augmentée jusqu'à environ 180 °C pour former une sorte de pâte homogène, laquelle est alors refroidie puis granulée jusqu'à solidification, puis conservée pour constituer le feedstock utilisable dans la fabrication d'une pièce de forme par injection selon une technique connue.

Dans cet exemple, on a utilisé plus particulièrement 17,2 kg de la poudre de zircone (86 % pds.) et 2,8 kg du liant (env. 14% pds) ayant la composition volumique suivante:
- 24 % de polyéthylène HD
- 10 % de polypropylène
- 4 % de copolymère d'éthylène et d'acide méthacrylique (à 6,5 % pds. d'acide méthacrylique, par exemple du type "Nucrel (TM)" de DuPont)
- 10 % d'une résine polymère méthacrylate d'iso-butyle ayant un poids moléculaire de 195'000 (par exemple du type "Elvacite (TM) 2045" de Lucite International)
- 1 % d'une résine copolymère méthacrylate d'isobutyle et N-butyle ayant un poids moléculaire de 165'000 (par exemple du type "Elvacite (TM) 2046" de Lucite International)
- 11 % de cire Carnauba
- 31 % d'une cire de paraffine (par exemple du type "Carisma 54 T (TM)" de Alpha Wax BV)
- 6% de bis-stéaramide de N, N'-éthylène
- 3 % d'un mélange d'acides stéarique et palmitique (par exemple du type Stéarine Dubois).

### Exemple 2

Le même type de feedstock que dans l'Exemple 1 ci-dessus est préparé en remplaçant l'oxyde de zirconium noir par de l'oxyde de zirconium blanc, et en utilisant des valeurs légèrement différentes des divers composants du liant, plus particulièrement:
- 26 % du polyéthylène HD
- 10% de polypropylène
- 4% de copolymère d'éthylène et d'acide méthacrylique
- 11 % de la résine "Elvacite 2045"
- 1% de résine "Elvacite 2046"
- 11% de cire de Carnauba
- 29 % de la cire de paraffine
- 8 % de la bis-stéaramide de N, N'-éthylène

### Exemple 3

Toujours avec les mêmes composants du liant organique, avec des proportions volumiques légèrement différentes, d'autres feedstocks peuvent être préparés avec divers poudres céramiques ou métalliques, plus particulièrement de l'alumine, avec indice de retrait de 1,19 ou 1,30 (translucide), du carbure de chrome ou du carbure de titane, du carbure de tungstène (de différentes qualités) et du tungstène métallique, selon le Tableau suivant (les échantillons des deux premières colonnes ne sont pas selon l'invention).

| Liant (% vol.) | Al₂O₃ | Al₂O₃ (transl.) | CrC (90% pds) | CW | W |
|---|---|---|---|---|---|
| | (85-6% pds) | (78-9% pds) | TiC (89% pds) | (94-94,5% pds) | (94-5% pds) |
| Polyéthylène HD | 26 | 28 | 24 | 25/25 | 26/25 |
| Polypropylène | 6 | 2 | 6 | 8/8 | 10/10 |
| Copolymère ("Nucrel") | 3,5 | 3 | 3 | 4/4 | 4/4 |
| Résine "Elvacite 2045" | 6 | 5 | 5 | 7/7 | 9/7 |
| Résine "Elvacite 2046" | 1 | 1 | 1 | 1/1 | 1/1 |
| Cire de Carnauba | 12 | 12 | 12 | 11/11 | 11/11 |
| Cire de paraffine | 35 | 39 | 39 | 34/37 | 29/32 |
| Bix-stéréamide de NN'-éthylène | 5,5 | 5 | 5 | 5/5 | 5/5 |
| Stéarine (Dubois) | 5 | 5 | 5 | 5/2 | 5/5 |

## Revendications

1. Composition de moulage par injection, dite feedstock, destinée à la fabrication de pièces de forme métalliques ou céramiques, ladite composition de moulage comprenant une poudre inorganique et un liant, ladite composition de moulage ayant une des compositions suivantes :
- 86% en poids de la poudre inorganique qui est une poudre d'oxyde de zirconium noir et 14% en poids du liant avec ledit liant ayant la composition volumique suivante : 24% de polyéthylène HD, 10% de polypropylène, 4% de copolymère d'éthylène et d'acide méthacrylique à 6,5% en poids d'acide méthacrylique, 10% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 31% d'une cire de paraffine, 6% de bis-stéaramide de NN'-éthylène et 3% d'un mélange d'acides stéarique et palmitique ;
- 86% en poids de la poudre inorganique qui est une poudre d'oxyde de zirconium blanc et 14% en poids du liant avec ledit liant ayant la composition volumique suivante : 26% de polyéthylène HD, 10% de polypropylène, 4% de copolymère d'éthylène et d'acide méthacrylique à 6,5% en poids d'acide méthacrylique, 11% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 29% d'une cire de paraffine, 8% de bis-stéaramide de NN'-éthylène ;
- 90% en poids de la poudre inorganique qui est une poudre de carbure de chrome, le complément étant le liant ayant la composition volumique suivante : 24% de polyéthylène HD, 6% de polypropylène, 3% de copolymère d'éthylène et d'acide méthacrylique à 6,5% en poids d'acide méthacrylique, 5% d'une résine polymère méthacrylate d'isobutyle ayant un poids moléculaire de 195000, 1% d'une résine copolymère méthacrylate d'isobutyle et de N-butyle ayant un poids moléculaire de 165000, 12% de cire de Carnauba, 39% d'une cire de paraffine, 5% de bis-stéaramide de NN'-éthylène et 5% d'un mélange d'acides stéarique et palmitique ;
- 89% en poids de la poudre inorganique qui est une poudre de carbure de titane, le complément étant le liant ayant la composition volumique suivante : 24% de polyéthylène HD, 6% de polypropylène, 3% de copolymère d'éthylène et d'acide méthacrylique à 6,5% en poids d'acide méthacrylique, 5% d'une résine polymère méthacrylate d'isobutyle ayant un poids moléculaire de 195000, 1% d'une résine copolymère méthacrylate d'isobutyle et de N-butyle ayant un poids moléculaire de 165000, 12% de cire de Carnauba, 39% d'une cire de paraffine, 5% de bis-stéaramide de NN'-éthylène et 5% d'un mélange d'acides stéarique et palmitique ;
- entre 94 et 94.5% en poids de la poudre inorganique qui est une poudre de carbure de tungstène, le complément étant le liant ayant la composition volumique suivante : 25% de polyéthylène HD, 8% de polypropylène, 4% de copolymère d'éthylène et d'acide méthacrylique à 6,5% en poids d'acide méthacrylique, 7% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 34% d'une cire de paraffine, 5% de bis-stéaramide de NN'-éthylène et 5% d'un mélange d'acides stéarique et palmitique ;
- entre 94 et 94.5% en poids de la poudre inorganique qui est une poudre de carbure de tungstène, le complément étant le liant ayant la composition volumique suivante : 25% de polyéthylène HD, 8% de polypropylène, 4% de copolymère d'éthylène et d'acide méthacrylique à 6,5% en poids d'acide méthacrylique, 7% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 37% d'une cire de paraffine, 5% de bis-stéaramide de NN'-éthylène et 2% d'un mélange d'acides stéarique et palmitique ;
- 94% en poids de la poudre inorganique qui est une poudre de tungstène, le complément étant le liant ayant la composition volumique suivante : 26% de polyéthylène HD, 10% de polypropylène, 4% de copolymère d'éthylène et d'acide méthacrylique à 6,5% en poids d'acide méthacrylique, 9% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 29% d'une cire de paraffine, 5% de bis-stéaramide de NN'-éthylène et 5% d'un mélange d'acides stéarique et palmitique ;
- 94% en poids de la poudre inorganique qui est une poudre de tungstène, le complément étant le liant ayant la composition volumique suivante : 25% de polyéthylène HD, 10% de polypropylène, 4% de copolymère d'éthylène et d'acide méthacrylique à 6,5% en poids d'acide méthacrylique, 7% d'une résine polymère méthacrylate d'isobutyle ayant un poids moléculaire de 195000, 1% d'une résine copolymère méthacrylate d'isobutyle et de N-butyle ayant un poids moléculaire de 165000, 11% de cire de Carnauba, 32% d'une cire de paraffine, 5% de bis-stéaramide de NN'-éthylène et 5% d'un mélange d'acides stéarique et palmitique.

## Patentansprüche

1. Spritzgusszusammensetzung, Beschickungsmaterial genannt, die zur Herstellung von metallischen oder keramischen Formteilen vorgesehen ist, wobei die Spritzgusszusammensetzung ein anorganisches Pulver und ein Bindemittel umfasst, wobei die Spritzgusszusammensetzung eine der folgenden Zusammensetzungen aufweist:
- 86 Gew.-% des anorganischen Pulvers, das ein schwarzes Zirkoniumoxidpulver ist, und 14 Gew.-% des Bindemittels, wobei das Bindemittel die folgende volumetrische Zusammensetzung aufweist: 24 % HD-Polyethylen, 10 % Polypropylen, 4 % Ethylen/Methacrylsäure-Copolymer mit 6,5 Gew.-% Methacrylsäure, 10% eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 31 % eines Paraffinwachses, 6 % N,N'-Ethylenbisstearamid und 3 % eines Gemischs von Stearinsäure und Palmitinsäure;
- 86 Gew.-% des anorganischen Pulvers, das ein weißes Zirkoniumoxidpulver ist, und 14 Gew.-% des Bindemittels, wobei das Bindemittel die folgende volumetrische Zusammensetzung aufweist: 26 % HD-Polyethylen, 10 % Polypropylen, 4 % Ethylen/Methacrylsäure-Copolymer mit 6,5 Gew.-% Methacrylsäure, 11 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 29 % eines Paraffinwachses, 8 % N,N'-Ethylenbisstearamid;
- 90 Gew.-% des anorganischen Pulvers, das ein Chromcarbidpulver ist, wobei der Rest das Bindemittel mit der folgenden volumetrischen Zusammensetzung ist: 24 % HD-Polyethylen, 6 % Polypropylen, 3 % Ethylen/Methacrylsäure-Copolymer mit 6,5 Gew.-% Methacrylsäure, 5 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 12 % Carnaubawachs, 39 % eines Paraffinwachses, 5 % N,N'-Ethylenbisstearamid und 5 % eines Gemischs von Stearinsäure und Palmitinsäure;
- 89 Gew.-% des anorganischen Pulvers, das ein Titancarbidpulver ist, wobei der Rest das Bindemittel mit der folgenden volumetrischen Zusammensetzung ist: 24 % HD-Polyethylen, 6 % Polypropylen, 3 % Ethylen/Methacrylsäure-Copolymer mit 6,5 Gew.-% Methacrylsäure, 5 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 12 % Carnaubawachs, 39 % eines Paraffinwachses, 5 % N,N'-Ethylenbisstearamid und 5 % eines Gemischs von Stearinsäure und Palmitinsäure;
- zwischen 94 und 94,5 Gew.-% des anorganischen Pulvers, das ein Wolframcarbidpulver ist, wobei der Rest das Bindemittel mit der folgenden volumetrischen Zusammensetzung ist: 25 % HD-Polyethylen, 8 % Polypropylen, 4 % Ethylen/Methacrylsäure-Copolymer mit 6,5 Gew.-% Methacrylsäure, 7 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 34 % eines Paraffinwachses, 5 % N,N'-Ethylenbisstearamid und 5 % eines Gemischs von Stearinsäure und Palmitinsäure;
- zwischen 94 und 94,5 Gew.-% des anorganischen Pulvers, das ein Wolframcarbidpulver ist, wobei der Rest das Bindemittel mit der folgenden volumetrischen Zusammensetzung ist: 25 % HD-Polyethylen, 8 % Polypropylen, 4 % Ethylen/Methacrylsäure-Copolymer mit 6,5 Gew.-% Methacrylsäure, 7 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 37 % eines Paraffinwachses, 5 % N,N'-Ethylenbisstearamid und 2 % eines Gemischs von Stearinsäure und Palmitinsäure;
- 94 Gew.-% des anorganischen Pulvers, das ein Wolframpulver ist, wobei der Rest das Bindemittel mit der folgenden volumetrischen Zusammensetzung ist: 26 % HD-Polyethylen, 10% Polypropylen, 4 % Ethylen/Methacrylsäure-Copolymer mit 6,5 Gew.-% Methacrylsäure, 9 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 29 % eines Paraffinwachses, 5 % N,N'-Ethylenbisstearamid und 5 % eines Gemischs von Stearinsäure und Palmitinsäure;
- 94 Gew.-% des anorganischen Pulvers, das ein Wolframpulver ist, wobei der Rest das Bindemittel mit der folgenden volumetrischen Zusammensetzung ist: 25 % HD-Polyethylen, 10% Polypropylen, 4 % Ethylen/Methacrylsäure-Copolymer mit 6,5 Gew.-% Methacrylsäure, 7 % eines Isobutylmethacrylat-Polymer-Kunststoffs mit einem Molekulargewicht von 195.000, 1 % eines Isobutyl-/N-Butylmethacrylat-Copolymer-Kunststoffs mit einem Molekulargewicht von 165.000, 11 % Carnaubawachs, 32 % eines Paraffinwachses, 5 % N,N'-Ethylenbisstearamid und 5 % eines Gemischs von Stearinsäure und Palmitinsäure.

## Claims

1. Injection moulding composition (feedstock) intended for the manufacture of metallic or ceramic shaped parts, said moulding composition comprising an inorganic powder and a binder, said moulding composition having one of the following compositions:
- 86% by weight of inorganic powder which is a black zirconium oxide powder and 14% by weight of binder with said binder having the following composition by volume: 24% HD polyethylene, 10% polypropylene, 4% ethylene and methacrylic acid copolymer containing 6.5% by weight of methacrylic acid, 10% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 31% of a paraffin wax, 6% NN'-ethylene bis-stearamide and 3% of a mixture of stearic and palmitic acids;
- 86% by weight of inorganic powder which is a white zirconium oxide powder and 14% by weight of binder with said binder having the following composition by volume: 26% HD polyethylene, 10% polypropylene, 4% ethylene and methacrylic acid copolymer containing 6.5% by weight of methacrylic acid, 11% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 29% of a paraffin wax, 8% NN'-ethylene bis-stearamide;
- 90% by weight of inorganic powder which is a chromium carbide powder, the remainder being the binder having the following composition by volume: 24% HD polyethylene, 6% polypropylene, 3% ethylene and methacrylic acid copolymer containing 6.5% by weight of methacrylic acid, 5% of an isobutyl methacrylate polymer resin having a molecular weight of 195,000, 1% of a copolymer resin of isobutyl methacrylate and of N-butyl methacrylate having a molecular weight of 165,000, 12% Carnauba wax, 39% of a paraffin wax, 5% NN'-ethylene bis-stearamide and 5% of a mixture of stearic and palmitic acids;
- 89% by weight of inorganic powder which is a titanium carbide powder, the remainder being the binder having the following composition by volume: 24% HD polyethylene, 6% polypropylene, 3% ethylene and methacrylic acid copolymer containing 6.5% by weight of methacrylic acid, 5% of an isobutyl methacrylate polymer resin having a molecular weight of 195,000, 1% of a copolymer resin of isobutyl methacrylate and of N-butyl methacrylate having a molecular weight of 165,000, 12% Carnauba wax, 39% of a paraffin wax, 5% NN'-ethylene bis-stearamide and 5% of a mixture of stearic and palmitic acids;
- between 94 and 94.5% by weight of inorganic powder which is a tungsten carbide powder, the remainder being the binder having the following composition by volume: 25% HD polyethylene, 8% polypropylene, 4% ethylene and methacrylic acid copolymer containing 6.5% by weight of methacrylic acid, 7% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 34% of a paraffin wax, 5% NN'-ethylene bis-stearamide and 5% of a mixture of stearic and palmitic acids;
- between 94 and 94.5% by weight of inorganic powder which is a tungsten carbide powder, the remainder being the binder having the following composition by volume: 25% HD polyethylene, 8% polypropylene, 4% ethylene and methacrylic acid copolymer containing 6.5% by weight of methacrylic acid, 7% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 37% of a paraffin wax, 5% NN'-ethylene bis-stearamide and 2% of a mixture of stearic and palmitic acids;
- 94% by weight of inorganic powder which is a tungsten powder, the remainder being the binder having the following composition by volume: 26% HD polyethylene, 10% polypropylene, 4% ethylene and methacrylic acid copolymer containing 6.5% by weight of methacrylic acid, 9% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 29% of a paraffin wax, 5% NN'-ethylene bis-stearamide and 5% of a mixture of stearic and palmitic acids;
- 94% by weight of inorganic powder which is a tungsten powder, the remainder being the binder having the following composition by volume: 25% HD polyethylene, 10% polypropylene, 4% ethylene and methacrylic acid copolymer containing 6.5% by weight of methacrylic acid, 7% of an isobutyl methacrylate polymer resin having a molecular weight of 195,000, 1% of a copolymer resin of isobutyl methacrylate and of N-butyl methacrylate having a molecular weight of 165,000, 11% Carnauba wax, 32% of a paraffin wax, 5% NN'-ethylene bis-stearamide and 5% of a mixture of stearic and palmitic acids.
